# EUROPEAN PATENT APPLICATION

(11) **EP 0 580 271 A2**
(43) Date of publication of application: **26.01.1994**
(21) Application number: 93250150.5
(22) Date of filing: 03.06.1993
(51) Int. Cl.: E21B 17/00, F16L 7/00

(54) **Drill pipe**

(30) Priority: 24.07.1992 US 918049
(71) Applicant: THE CHARLES MACHINE WORKS INC, Perry, Oklahoma 73077 (US)
(72) Inventor: Martin, J. Scott, Perry, Oklahoma 73077 (US); Stephenson, Brent G., Oklahoma City, Oklahoma 73122 (US)
(74) Representative: UEXKÜLL & STOLBERG

(57) **Abstract**

A drill pipe (10) is disclosed which includes a cylindrical pipe section (12), a box end (14), a pin end (16) and a hydraulic hose assembly (18) connected between the box and pin ends and extending within the cylindrical pipe section. By passing drilling fluid through the hydraulic hose assembly (18), the interior surface of the cylindrical pipe section (12) is not exposed to the drilling fluid and does not need to be treated to prevent corrosion. Further, the reduced volume of the hydraulic hose assembly (18) relative to conveying the drilling fluid through the interior of the cylindrical pipe section reduces significantly the waste of drilling fluid, allows the fluid to be pressurized more rapidly to initiate drilling operation, and limits fluid spill damage to the environment. A rigid or flexible tube can replace the hose assembly (18), with the tube attached to the ends by threads, seals, press fits, O-rings or adhesives, or any combination thereof.

## Description

### TECHNICAL FIELD OF THE INVENTION

This invention relates to drilling, and in particular to drilling using a drilling fluid conveyed through drill pipe.

### BACKGROUND OF THE INVENTION

In drilling, a drill bit is typically rotated and moved forward in the borehole by a drill string made up of a number of individual drill pipes. Often, the drilling action of the bit is assisted by the flow of a drilling fluid or mud flowing through the drill pipe. The fluid is discharged at the drill bit to cool the bit and remove debris. The drilling fluid then flows out of the borehole in the annulus formed between the drill string and the wall of the borehole.

In horizontal drilling of the type used in trenchless drilling technology, fluid is typically discharged at the drill bit through a nozzle jet or jets to increase discharge velocity. Corrosion particles in the fluid tend to plug filter screens and nozzles, and reduce or block fluid flow. High quality steel drill pipe is typically coated on its inside surface to minimize the amount of corrosion and particle generation as the drilling fluid flows through the pipe. Such a coating process is expensive. The extra coating requirement adds direct manufacturing costs, handling costs, inventory costs, environmental costs and quality costs to the finished product. To date, filling the entire interior volume of the drill pipe and conveying the drilling fluid in direct contact with the drill pipe interior wall has been the only mechanism to deliver the drilling fluid to the drill bit at the cutting face. However, a need exists to improve this delivery system and reduce the total costs of the drilling operation, including the costs of drill pipe manufacturing.

### SUMMARY OF THE INVENTION

In accordance with one aspect of the present invention, a drill pipe is provided for use in a drill string rotating a drill bit and conveying a drilling fluid. The drill pipe includes a pipe section having a first end and a second end. A pin end having a male threaded portion and a passage formed therethrough is welded or by some other means formed onto or attached to the first end of pipe section. A box end having a female threaded portion and a passage formed therethrough is welded or by some other means formed onto or attached to the second end of the pipe section. A metal, plastic, or composite construction tube or hose is attached between the pin end and the box end to convey drilling fluid through the drill pipe. The interior volume of the tube or hose is considerably smaller than the interior volume of the pipe section.

In accordance with another aspect of the present invention, a method of drilling is provided wherein the drilling is performed by a drill string extending to a drill bit. The drill string is formed of a plurality of drill pipes with each drill pipe having a pipe section, a male threaded end and a female threaded end, and a passage formed therethrough for conveying drilling fluid to the drill bit. The interior of the unimproved drill pipe section has a predetermined volume. The improved method includes the steps of attaching a first end of a hydraulic hose to the male threaded end of the drill pipe and the other end of the hydraulic hose to the female threaded end of the drill pipe, the hose passing through the passage in the pipe section. The method further includes the step of conveying the drilling fluid through the pipe section within the hydraulic hose. The interior volume of the drill pipe with the hydraulic hose is less than the predetermined volume within the unimproved drill pipe. This improvement conserves drilling fluid, and limits fluid spill damage to the environment.

In accordance with yet another aspect of the present invention, a drill pipe is provided for use in a drill string rotating a drill bit and conveying a drilling fluid. The drill pipe includes a pipe section having a predetermined diameter established by the torque and force carrying requirements of the drill string to rotate, advance, and directionally steer the drill bit. The pipe section has a first end and a second end. A pin end has a male threaded portion to attach the drill pipe to an adjacent drill pipe. The pin end has a passage formed therethrough with a female threaded portion or other means of attachment at one end of the passage. The pin end is welded or by some other means formed onto or attached to the first end of the pipe section. A box end has a female threaded portion for attachment to the adjacent drill pipe. The box end further has a passage formed therethrough and a female threaded portion or other means of attachment formed at one end of the passage. The box end is welded or by some other means formed onto or attached to the second end of the pipe section. A hydraulic hose assembly can be provided which has a first male threaded end, a second male threaded end and a flexible hydraulic hose extending between the male ends. The male ends are threaded in the female threaded portions at the passage through the pin and box ends. The interior diameter of the hydraulic hose is determined by the flow requirements of the drilling fluid. Another type of interior conduit can be used in place of the flexible, common hydraulic hose assembly. A rigid or flexible metal, plastic, or composite construction tube or hose can be provided to attach at the pin and box ends of the drill pipe. The means of attachment could be any combination of threads, seals, press fits, O-rings, or adhesive joint.

### BRIEF DESCRIPTION OF THE DRAWINGS

For a more complete understanding of the present invention and the advantages thereof, reference is now made to the following description taken in conjunction with the accompanying drawings, in which:
FIGURE 1 is a cross-sectional view of a drill pipe of welded construction forming a first embodiment of the present invention;
FIGURE 2 is a cross-sectional view of a box end used in a drill pipe of welded construction;
FIGURE 3 is a cross-sectional view of a pin end used in a drill pipe of welded construction;
FIGURE 4 illustrates a second embodiment of the invention with a drill pipe of arc welded construction with an internal conduit that is a rigid or flexible tube;
FIGURE 5 illustrates a modification of the second embodiment of the invention with a drill pipe with an internal conduit, with the drill pipe of spin, inertia, or friction weld construction; and
FIGURE 6 illustrates another modification of the second embodiment of the invention with a drill pipe with an internal conduit that is a rigid or flexible tube and the drill pipe shows one type of forged upset end construction.

### DETAILED DESCRIPTION

With reference now to the accompanying figures in the following Detailed Description, a drill pipe 10 forming a first embodiment of the present invention is described.

As can be seen, the drill pipe is formed of a number of elements, including a cylindrical pipe section 12. At a first end of the pipe section is welded a box end 14. At the other end of the pipe section is welded a pin end 16. A hydraulic hose assembly 18 is secured between the ends 14 and 16 and runs within the interior of the pipe section 12. The ends 14 and 16, and pipe section 12, are designed to transmit the forces, including torque, necessary for the drill bit to perform its function. The drilling fluid is conveyed between the ends 14 and 16 within the drill pipe through the hydraulic hose assembly 18.

The design of drill pipe 10 has significant advantages. The pipe section 12, and ends 14 and 16 can be designed to optimize the force carrying characteristics required for the drill bit. A one-piece rotating drill pipe of stiff construction and thin wall is advantageous for economical manufacturing cost. Because the interior surface 20 of the pipe section 12 will not be exposed to drilling fluids, no expensive protective coating need be applied to this interior surface. In prior designs, a coated surface was a requirement to protect the interior wall of the drill pipe from corrosion and to prevent debris, such as rust particles, from traveling in the drilling fluid and plugging up the nozzle openings of the drill bit. This is particularly critical when using low pressure, low flow rate nozzle openings. The pipe section 12 can therefore be designed solely on the basis of torque and force requirements of the drilling unit, and not as a pipeline to convey the drilling fluid.

In addition, the size of the hydraulic hose assembly 18 can be selected to optimize the flow characteristics of the drilling fluid being utilized. In the past, when the drilling fluid simply flowed through the interior volume 22 of the drill pipe, sufficient drilling fluid would have to be pumped into the drill string to fill up each drill pipe before the drilling fluid could be delivered at the drill bit with sufficient flow and pressure. Every time the drilling operation was halted, a portion of this drilling fluid would flow out of the drill string. To initiate further drilling, the lost drilling fluid would have to be replenished in the drill string before the drilling fluid would again be delivered to the drill bit with sufficient pressure and quantity. This procedure contributes to wastage of large volumes of drilling fluids, and drilling operation time delays. In addition to the high cost of drilling fluids, the fluids are becoming an ever greater environmental concern and the elimination of waste of the drilling fluid is an increasingly significant advantage.

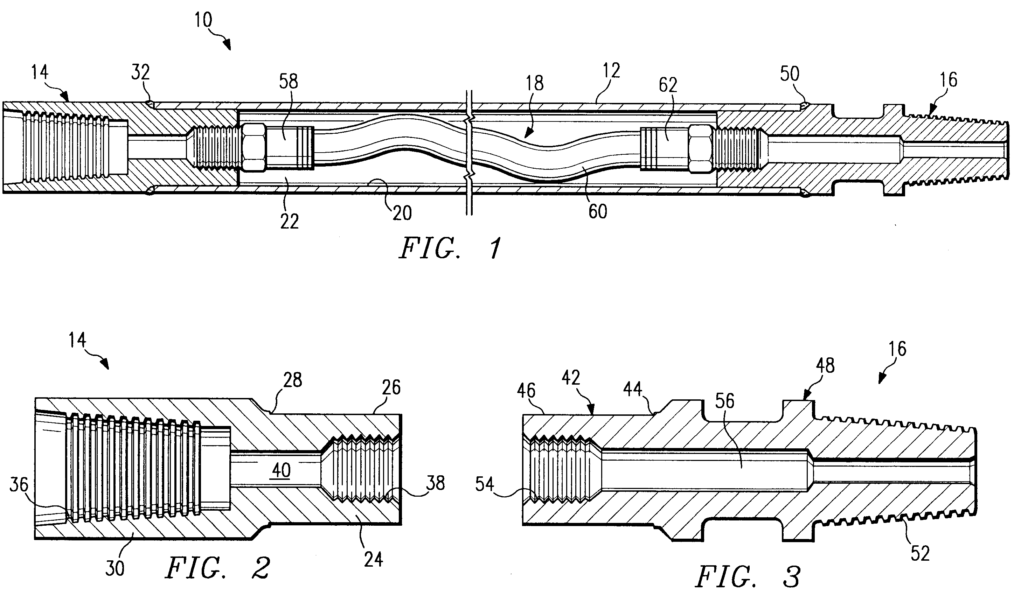

With reference to FIGURES 1-3, further details of the drill pipe 10 will be described. As can be seen, the box end 14 has a reduced diameter portion 24 which has an outer surface 26 designed for a close fit with the interior surface 20 of the pipe section 12. A stepped portion 28 forms a transition between outer surface 26 and the exterior portion 30 of the box end. The portion 28 reduces stress concentration and also provides a groove for the weld bead 32 which secures the box end to the pipe section. The outer diameter of the exterior portion 30 is larger or preferably equal to the outer diameter of the pipe section 12.

Female connection thread 36 is formed in the interior portion 30 to receive the pin end of the adjacent drill pipe, allowing the drill pipes to be threaded together. A female pipe thread 38 is formed in the reduced diameter portion 24 and a passage 40 is formed through the box end.

The pin end has a reduced diameter portion 42 which is a tight fit with the interior surface 20 of the pipe section 12. A stepped portion 44 forms a transition between the outer surface 46 of the reduced diameter portion 42 and the exterior portion 48 of the pin end. Again, the portion 44 defines a groove for weld bead 50 to weld the pin into the pipe section 12. A male connection thread 52 is formed on the exterior portion 48 to thread the drill pipe to the box end of the adjacent drill pipe. A female pipe thread 54 is formed into the reduced diameter portion 42 and a passage 56 extends through the pin end.

With reference to FIGURE 1, the hydraulic hose assembly 18 can be seen to include a male threaded connector 58, a flexible hose 60 and a male threaded connector 62. The male threaded connector 58 is threadedly received in the female pipe threads 38 of the box end. The male threaded connector 62 is threadedly received in the female pipe threads 54 of the pin end 16.

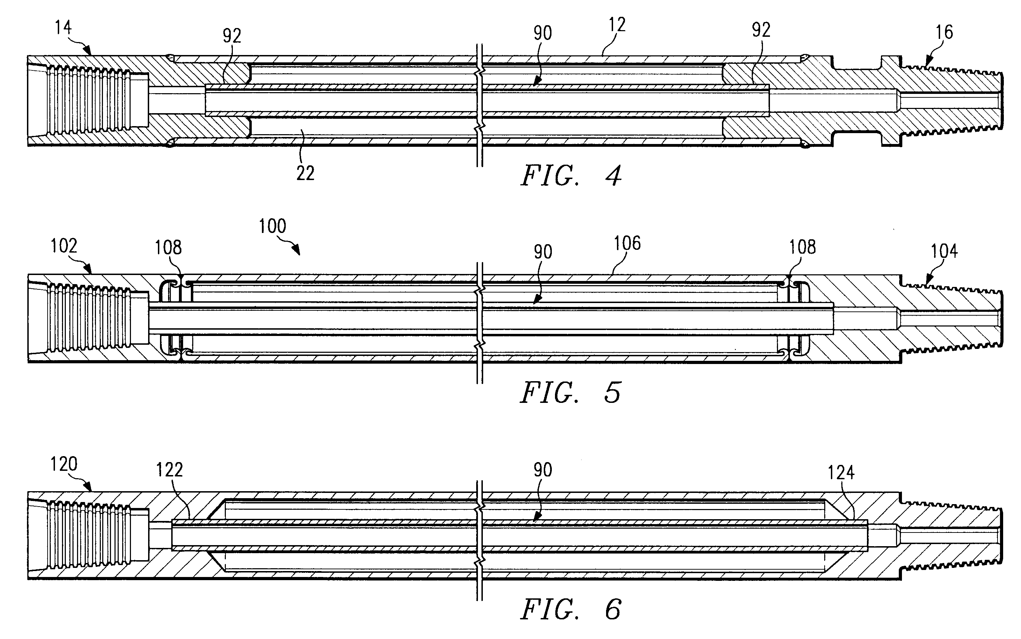

If desired, the common hydraulic hose assembly 18 could be replaced by a rigid or flexible tube or hose 90 with ends sealed to the passage through the box and pin ends as shown in FIGURE 4. For example, the rigid or flexible tube 90 could have threaded ends to be received in threads 38 and 54. Alternatively, O-ring seals or any other combination of threads, seals, press fits, O-rings, or adhesive joint could be used to join the rigid or flexible tube to the box and pin ends. A press fit joint 92 is shown in FIGURE 4. The internal tube 90 could be made of a variety of materials, including stainless steel, some other metal, plastic or composite construction.

The hydraulic hose assembly 18 can be installed in the pipe section 12 and attached to the pin and box ends before inserting the ends 24 and 42 into the pipe section 12 to be welded. It would be possible to have sufficient extra length in the hose 60 to allow the ends to be made up by hand prior to welding the pin and box end in place in the pipe section. Alternatively, as the hose has flexibility, a mechanism could be utilized to stretch the hose sufficiently to tighten the hose assembly to the box and pin ends using little or no excess hose within the pipe section.

The rigid or flexible tubing or hose would be installed in a manner similar to that used in the common hydraulic hose installation. Alternatively, the tubing could be installed after the drill pipe elements are assembled or formed together. This could allow friction welded construction of the drill pipe and replacement repair of the tube. FIGURE 5 illustrates a drill pipe 100 having box end 102 and pin end 104 friction welded at welds 108 onto the pipe section 106. The tube 90 is sealed at its ends to the box end 102 and pin end 104.

Also, this could allow the tubing to be installed in a drill pipe 120 of forged upset ends 122 and 124 as seen in FIGURE 6, and/or machined, and/or threaded joint end or ends construction. This "non-welded" construction of the drill pipe is required for some drilling applications. This method of design would also allow replacement repair of the tube.

In accordance with drill pipe assembled using the teachings of the present invention, the drill pipe in service was judged roughly equivalent to current fusion bonded epoxy coated drill pipe in corrosion resistance but at significantly less cost and higher more uniform quality. The drilling fluid volume contained inside the drill pipe was decreased approximately 86% from drill pipe without a hose assembly, leading to a significant reduction in wasted drill fluid especially when removing drill pipe during a backreaming operation. The response time required to bring the drill pipe to the appropriate fluid pressure for drilling and backreaming was also greatly reduced by the reduction of fluid volume inside the drill string.

Although several embodiments of the invention have been illustrated and described with numerous specific details in the foregoing description and accompanying drawings, it will be understood that the invention is not limited to the embodiment disclosed, but is capable of numerous rearrangements, modifications and substitutions of parts and elements without departing from the spirit and scope of the invention.

## Claims

1. A drill pipe for use in a drill string rotating a drill bit or backreaming tool and conveying a drilling fluid, comprising:
a pipe section having a first end and a second end;
a pin end having a male threaded portion and a passage formed therethrough, the pin end secured to the first end of the pipe section;
a box end having a female threaded portion and a passage formed therethrough, the box end secured to the second end of the pipe section; and
a drilling fluid conveying device attached between the pin end and the box end to convey drilling fluid through the pipe section interior.

2. The drill pipe of Claim 1 wherein the pipe section has an inner surface, the inner surface being without protection against the presence of drilling fluid as the drilling fluid is conveyed within the drilling fluid conveying device and does not contact the inner surface of the pipe section.

3. The drill pipe of Claim 1 wherein the pipe section has a wall thickness, the wall thickness determined independently of corrosion effects on the inner surface thereof as the inner surface is not exposed to the drilling fluid.

4. The drill pipe of Claim 1 wherein the drilling fluid conveying device has an interior volume and the pipe section has an interior volume, the interior volume of the drilling fluid conveying device being less than the interior volume of the pipe section.

5. The drill pipe of Claim 1 wherein the pin and box end mate up with mating ends on adjacent drill pipe, the passage through each of the pin and box ends being aligned with a passage in the mating end.

6. The drill pipe of Claim 1 wherein said drilling fluid conveying device is a hydraulic hose assembly, the hydraulic hose assembly comprising a common hydraulic hose and further comprising threaded hydraulic hose connectors at each end of the hydraulic hose, one of the threaded hydraulic hose connectors threadedly secured to the pin end and the other of said hydraulic hose connectors threadedly secured to the box end.

7. The drill pipe of Claim 1 wherein said drilling fluid conveying device is a tube assembly, the tube assembly comprising a tube and further comprising means at each end of the tube for securing one end to the pin end and the other end to the box end.

8. A method of drilling wherein the drilling is performed by a drill string extending to a drill bit, the drill string formed of a plurality of drill pipes, each drill pipe having a male threaded end and a female threaded end and a passage formed therethrough for passage of drilling fluid to the drill bit, the interior of the drill pipe having a predetermined volume, comprising the steps of:
attaching a first end of a hydraulic hose to the male threaded end of the drill pipe and the other end of the hydraulic hose to the female end of the drill pipe, the hose passing through the passage in the pipe section;
conveying the drilling fluid through the pipe section within the hydraulic hose, the interior volume of the improved drill pipe with the hydraulic hose being less than the predetermined volume within the drill pipe, the improvement conserving drilling fluid, and limiting fluid spill damage to the environment.

9. A method of drilling or backreaming wherein the drilling or backreaming is performed by a drill string extending to a drill bit or backreaming tool, the drill string formed of a plurality of drill pipes, each drill pipe having a male threaded end and a female threaded end and a passage formed therethrough for passage of drilling fluid to the drill bit, the interior of the drill pipe having a predetermined volume, comprising the steps of:
attaching a first end of a rigid or flexible tube to the male threaded end of the drill pipe and the other end of the tube to the female end of the drill pipe, the tube passing through the passage in the pipe section; and
conveying the drilling fluid through the pipe section within the tube, the interior volume of the improved drill pipe with the tube being less than the predetermined volume within the drill pipe, the improvement conserving drilling fluid, and limiting fluid spill damage to the environment.

10. A drill pipe for use in a drill string rotating a drill bit or backreaming tool and conveying a drilling fluid, comprising:
a pipe section having a predetermined diameter established by the torque and force carrying requirements of the drill string to rotate, advance and steer the drill bit or the backreaming tool, the pipe section having a first end and a second end;
a pin end having a male threaded portion to threadedly attach the drill pipe to an adjacent drill pipe, the pin end having a passage formed therethrough, the pin end further having a female threaded portion at one end of the passage, the pin end welded to the first end of the pipe section;
a box end having a female threaded portion for attachment to an adjacent drill pipe, said box end further having a passage formed therethrough, a female threaded portion being formed at one end of the passage, the box end welded to the second end of the pipe section; and
a hydraulic hose assembly having a first male threaded end, a second male threaded end and a flexible hydraulic hose extending between the male ends, the male ends being threaded in the female threaded portions at the passage through the pin and box ends, the interior diameter of the hydraulic hose being determined by the flow requirements for the drilling fluid.

11. A drill pipe for use in a drill string rotating a drill bit or a backreaming tool and conveying a drilling fluid, comprising:
a pipe section having a predetermined diameter established by the torque and force carrying requirements of the drill string to rotate, advance and steer the drill bit or backreaming tool, the pipe section having a first end and a second end;
a pin end having a male threaded portion to threadedly attach the drill pipe to an adjacent drill pipe, the pin end having a passage formed therethrough, the pin end further having a female portion at one end of the passage, the pin end welded to the first end of the pipe section;
a box end having a female threaded portion for attachment to an adjacent drill pipe, said box end further having a passage formed therethrough, the box end further having a female portion at one end of the passage, the box end welded to the second end of the pipe section; and
a rigid or flexible tube assembly having a tube with a first end and a second end, the ends being received in the female portions at the passage through the pin and box ends and sealed thereto, the interior diameter of the tube being determined by the flow requirements for the drilling fluid.

12. A drill pipe for use in a drill string rotating a drill bit or a backreaming tool and conveying a drilling fluid, comprising:
a pipe section having a predetermined diameter established by the torque and force carrying requirements of the drill string to rotate, advance and steer the drill bit or backreaming tool, the pipe section having a first end and a second end;
a pin end having a male threaded portion to threadedly attach the drill pipe to an adjacent drill pipe, the pin end having a passage formed therethrough, the pin end further having a female portion at one end of the passage, the pin end attached to the first end of the pipe section by any combination of forging and/or machining and/or threading operations;
a box end having a female threaded portion for attachment to an adjacent drill pipe, said box end further having a passage formed therethrough, the box end further having a female portion at one end of the passage, the box end attached to the second end of the pipe section by any combination of forging and/or machining and/or threading operations; and
a rigid or flexible tube assembly having a tube with a first end and a second end, the ends being received in the female portions at the passage through the pin and box ends and sealed thereto, the interior diameter of the tube being determined by the flow requirements for the drilling fluid.
